# EUROPEAN PATENT SPECIFICATION

(11) **EP 3 387 911 B1**
(45) Date of publication and mention of the grant of the patent: **25.03.2020**
(21) Application number: 16871838.5
(22) Date of filing: 29.11.2016
(51) Int. Cl.: A23G 1/34, A23G 1/36, A23G 1/40, A23G 1/32, A23G 1/48

(54) **OPTIMISED ALTERNATIVE CHOCOLATE FORMULATION MADE FROM CAROB BEAN, MILK-FREE, WITH OR WITHOUT ADDED SUGAR, GLUTEN-FREE, SOY-FREE AND WITH OR WITHOUT FIBRES**
OPTIMIERTE ALTERNATIVE SCHOKOLADENFORMULIERUNG AUS JOHANNISBROTSCHOTE, MILCHFREI, MIT ODER OHNE ZUSÄTZLICHEM ZUCKER, GLUTENFREI, SOJAFREI UND MIT ODER OHNE BALLASTSTOFFEN
FORMULATION OPTIMISÉE DE CHOLOCAT SUCCÉDANÉ DE CAROUBE SANS LAIT, AVEC OU SANS ADDITION DE SUCRE, SANS GLUTEN, SANS SOJA ET AVEC OU SANS FIBRES

(30) Priority: 07.12.2015 BR 102015306296
(43) Date of publication of application: 17.10.2018
(73) Proprietor: Oliveira, Luiz Carmine Giunti De, Campina Grande do Sul (BR); Oliveira, Eloisa Helena Orlandi Giunti, Campina Grande do Sul (BR)
(72) Inventor: Oliveira, Luiz Carmine Giunti De, Campina Grande do Sul (BR); Oliveira, Eloisa Helena Orlandi Giunti, Campina Grande do Sul (BR)
(74) Representative: Isern Patentes y Marcas S.L.
(86) International application number: PCT/BR2016/050310
(87) International publication number: WO 2017/096448

(56) References cited:
- WO-A1-00/40101
- WO-A1-2009/001063
- BR-A- 0 304 954
- BR-A- PI0 403 389
- BR-A2- PI0 801 674
- BR-A2- PI0 905 549
- BR-A2- PI1 000 670
- BR-A2- PI1 003 335
- BR-E2-132015 020 227
- FR-A1- 2 511 847
- IT-B- 1 235 671
- US-A- 4 296 141

## Description

The present invention relates to optimized formulation of alternative chocolate of carob without milk, with or without added sugar, gluten-free, without soy and with or without fibers.

Referring to the present invention patent to improvements introduced into optimized formulation of products subject to the Brazilian patents PI 0304954-0, PI 0403389-2 and PI 1000670-2, in various forms of presentation (tablets, bars, candies, etc.) with carob bean base and obtaining alternative chocolate type food, with special nutritional characteristics to serve consumers with food restrictions, due to problems of health, or life philosophy (lights, naturalists, bodybuilders, etc.), obtaining attributes of color, odor and flavor characteristic of cocoa-based products, without milk (without lactose and without milk proteins), without caffeine, without theobromine, with or without added sugar, gluten-free, with and without fibers and without allergenic ingredients.

As it is known about the technical means related to the food industry, there are currently products in stores that are normally naturalistic, with the objective of being alternative chocolate and based on the carob, with formulas that use carob powder, fractionated vegetable fat of palm, milk and/or its derivatives, aroma, emulsifier soy lecithin and sweeteners, malt extract and in some cases mixing cocoa butter, seeds or nuts, dried and/or powdered fruits, such as coconut, toasted cashew and raisins. Current formulations present limitations and drawbacks of not fully meeting the demands for diabetics, lactose intolerant, milk and soy protein allergy, and light attributes; Only have taste similar to chocolate products when they join milk with sugar (sucrose) with malt extract; Some have unpleasant odors due to the use of excess lecithin and seeds; Some have poor appearance and no stiffness, unlike cocoa products; And some incorporate seeds or fruits or nuts to enhance the flavor.

A great evolution recently emerged through an optimized formulation, object of the Brazilian patent PI 0304954-0, entitled Formulation optimized in carob industrialization as chocolate alternative, from the same inventors of the present invention of optimized formulations of products, in various forms of presentation (tablets, bars, candies, etc.) with carob as a base and obtaining alternative chocolate-type food, with special nutritional characteristics to serve consumers with food restrictions due to problems of health, or life philosophy (lights, naturalists, bodybuilders, etc.), obtaining attributes of color, odor, and flavor characteristic of products based on cocoa and additionally using sweeteners from natural source.

More recently an alternative chocolate formulation of carob has been developed which is the subject of the Brazilian patent application PI0403389-2, of the same inventor as the present patent, entitled "Alternative Chocolate Formulations of Lactose-free carob" of optimized product formulations, in various forms of presentation (tablets, bars, candies, etc.) with carob as a base and obtaining alternative chocolate-type food, with special nutritional characteristics to serve consumers with food restrictions due to health problems or life philosophy (lights, naturalists, bodybuilders, etc.), obtaining attributes of color, odor, and flavor characteristic of products based on cocoa and additionally, using sweeteners from natural source.

Further evolution has been achieved with alternative chocolate formulation of carob, object of the Brazilian patent application PI 1000670-2, of the same inventor of the present patent that has the carob as a base, and discloses alternative chocolate type foods with special nutritional characteristics to serve the consumer segment with food restrictions, due to health problems or life philosophy (lights, naturalists, bodybuilders, etc.), obtaining attributes of color, odor and flavor characteristic of products based on cocoa, source of fibers, without caffeine, without theobromine, without allergenic ingredients, gluten-free and additionally using only lactose-free natural source ingredients, but sweetened with demerara dark sugar.

BR132015020227 discloses formulations for carob-based chocolate substitutes that are soy-free, lactose-free, gluten-free, have no added sugars and have added fiber comprising 20 to 45% cocoa butter, 0 to 25% cocoa liquor, 5 to 25% carob, 20 to 40% maltitol, 0 to 15% maltodextrin and 5 to 15% polydextrose.

BR1003335 discloses formulations for carob-based chocolate substitutes that are lactose-free, gluten-free, have no added sugar, but that contain soy products. The formulations comprise 3 to 60% powdered carob, 25 to 45% palm oil, 10 to 40% maltitol, 3 to 30% soy protein extract, 0 to 20% maltodextrin, 0 to 0.5% soy lecithin, 0.03 to 0.09% flavor identical to natural condensed milk flavor, 0.02 natural to 0.09% vanilla flavor and 0.01 to 0.04% natural hazelnut flavor.

The formulations disclosed in the state of the art do not provide solutions for soy replacement, not meeting the needs of soy allergy consumers and milk proteins, intolerant to lactose and gluten in a single product without sugar, without milk and with fibers. Moreover, without the drawbacks of using high percentages of maltitol that if consumed in excess, causes undesirable effects for some people, and can cause gastrointestinal discomforts such as: flatulence, abdominal pain and in some cases diarrhea.

"OPTIMIZED FORMULATION OF ALTERNATIVE CHOCOLATE OF CAROB WITHOUT MILK, WITH AND WITHOUT ADDED SUGAR, GLUTEN-FREE, WITHOUT SOY AND WITH AND WITHOUT FIBERS", object of the present invention relates to improvements in product formulation in various forms of presentation (tablets, bars, candies in the solid form), taking carob as base and obtaining alternative chocolate-type food, with special nutritional characteristics to serve the consumer segment with food restrictions due to health problems or life philosophy, obtaining characteristic attributes of color, odor and flavor without soy, without milk (lactose-free and without milk proteins), without caffeine, without theobromine, with and without added sugar, gluten-free, with and without fibers, with low sugars glycemic index and without allergenic ingredients.

The current formulations present the following technical problems which have been solved by the present invention as follows:
1. Presence of soy in the composition that limits the use of the alternative of chocolate to persons not allergic to soy, solved by the present patent through the substitution of soy for another alimentary raw material; and
2. Difficulty of balancing an alternative chocolate formulation with proteins and carbohydrates obtained from food raw materials, solved by the present patent through the choice of compatible ingredients, which have in their composition a nutritional profile that obtains flavor, softness and desired texture; and
3. The need to use sweeteners which cause undesirable effects on the digestive and intestinal system, such as diarrhea, resolved by the present patent through the use of low glycemic index sugars. Initially, continuous and costly researches and practical tests were carried out, optimized and balanced mixtures were obtained from the following assumptions and technical characteristics:
   a) Researches for types and quantities of raw materials and substitutes for ingredients containing the milk allergen and which have a neutral color, odor and taste and appearance of powder;
   b) Researches for types and quantities of raw materials and substitutes for ingredients containing the allergen of soy, and which have a neutral color, odor and flavor and appearance of powder;
   c) Researches for types and quantities of raw materials and substitutes for gluten-containing ingredients, which have a neutral color, odor and flavor and appearance of powder;
   d) Researches for types and quantities of sweeteners and their effects on the digestive and intestinal system;
   e) Researches for types and quantities of raw materials and ingredients containing fibers or which are sources of fibers
   f) Research of balanced mixtures of ingredients to obtain the desired fat, protein and calorie content and in accordance with current health legislation.

The present invention is defined by the claims.

The following ingredients were chosen:
1) Powdered polydextrose is a soluble fiber that has several health benefits. Fiber has been recognized as one of the main components of a healthy diet. Because the fibers are not digestible and absorbed, they hardly provide calories. In addition, they improve intestinal transit, reducing the risk of certain diseases (constipation, chronic constipation, diverticulitis, irritable bowel syndrome and even bowel cancer). Fibers absorb toxic or harmful substances into the body and help lower excess cholesterol and triglycerides in the blood, as well as serve as a preventive and adjunctive treatment for type 2 diabetes and cardiovascular diseases. The fibers help as a coadjuvant in reducing body weight, since they act in satiety.
   Polydextrose is considered a prebiotic fiber because it has the capacity to increase beneficial intestinal flora, contributing to human digestive health. The application of the polydextrose fiber to the formulation, besides granting fill and body to dough as a function of the withdrawal of the sugar, does not lose the quality of the finished product such as the brightness of the product.
2) Coconut fat in liquid form present in coconut oil and coconut milk is rich in antioxidants. In addition, the fat present in coconut oil and coconut milk improves the immune system by containing the lauric acid in its composition. In terms of technological application, during the first phase of mixing the ingredients, both coconut oil and coconut milk leave the dough more homogeneous and elastic, mainly, returning the fat lost due to milk withdrawal. The coconut oil and coconut milk provide a better sensorial profile, giving softness and *mouthfell* to the finished product.
3) In rice derivatives (rice flour, powdered rice extract and powder for preparation of rice-based beverages), carbohydrates are basically represented by starch, which is formed by amylose and amylopectin chains, responsible by many of the final product properties, the most important being gelatinization. The second major component in the rice flour structure is the protein, accounting for about 7-9% of its composition. For this reason, rice flour is applied to the formulations in substitution for the protein found in soy extract and also for not containing gluten and food allergens in its composition.

The ingredients fractioned fat, carob, maltodextrin, sucralose, polydextrose, maltitol, flavorings and lecithin used are in solid form.

The industries that produce diet and light foods are widely used in many types of processed foods, the maltodextrin ingredient in substitution for sugars and milk powder derivatives. Rice flour, rice extract, rice-based beverage powder and sweet potato powder are great substitutes as a body agent for maintaining the greatest possible similarity to the properties of the traditional maltodextrin product, which relates to technological improvements (viscosity and solubility), sensory aspects such as taste, texture and odor of finished products.

The rice extract in the form of whole powder contains in its composition rice, sea salt, anti-humectant INS 551 and has the following nutritional values: Portion in 100g; Energy 388.13Kcal; Proteins 9.90g; Carbohydrate 82.25g; Total Fat 2.17g; Saturated fat 0.60g; Monounsaturated fat 0.76g; Polyunsaturated Fat 0.81g; Fat Trans 0g; Cholesterol 0g; Fibers 2.2g; Sodium 237.3mg; Calcium 11.4mg; Potassium 188.8mg; Iron 1.33mg.

The powder for preparation of rice-based beverages has the following nutritional values for the 30 g portion: Energy value 114 kcal = 479 kJ; Carbohydrates, of which: 25g; Sugars 7g; Lactose 0g; Protein 2g; Total Fat, of which: 0g; Saturated 0g; Trans 0g; Monounsaturated 0g; Polyunsaturated 0g; Cholesterol 0mg; And sodium 45mg.

In the researches carried out initially to obtain formula (I) of the present patent, the following formulations in % by weight were tested:

### TEST 1

| **INGREDIENTS** | % |
|---|---|
| Fractionated vegetable fat of palm | 29.50 |
| Maltitol sweetener | - |
| Coconut oil | 1.50 |
| carob powder | 66.00 |
| Polydextrose | - |
| Maltodextrin | - |
| Rice flour | 2.23 |
| Sunflower lecithin | 0.40 |
| Natural vanilla aroma | 0.07 |
| Aroma identical to the natural condensed milk | 0.20 |
| Aroma identical to natural hazelnut | 0.10 |

Result: Sandy mass, color and odor predominantly of carob. Astringent mass. Disapproved by tasters.

### TEST 2

| **INGREDIENTS** | % |
|---|---|
| Fractionated vegetable fat of palm | 30.00 |
| Maltitol Sweetener | - |
| Coconut oil | 2.00 |
| carob powder | 65.00 |
| Polydextrose | - |
| Maltodextrin | - |
| Rice flour | 2.63 |
| Sunflower Lecithin | 0.40 |
| Natural vanilla aroma | 0.07 |
| Aroma identical to the natural condensed milk | 0.20 |
| Aroma identical to natural hazelnut | 0.10 |

Result: Dough with color and odor predominant of carob still remaining a bit sandy, and can be used as a complement in baking: cookies, cakes etc ... Approved by tasters.

### TEST 2A

Repeated with the same formula of Test 2 replacing the coconut oil with coconut milk and the same final result was obtained

### TEST 2B

Repeated with the same formula of Test 2 replacing the flour of rice by rice extract and the same final result were obtained.

### TEST 2C

Repeated with the same formula of test 2-B replacing the milk of coconut by coconut oil and the same final result was obtained.

### TEST 2D

Repeated with the same formula of test 2 replacing the flour of rice by powder for preparation of rice-based beverage and obtained the same final result.

### TEST 2E

Repeated with the same formula of the test 2-D replacing the oil of coconut for coconut milk and the same final result was obtained.

### TEST 2.1

| **INGREDIENTS** | % |
|---|---|
| Fractionated vegetable fat of palm | 30.00 |
| Maltitol Sweetener | 36.00 |
| Coconut oil | 3.00 |
| carob powder | 10.00 |
| Polydextrose | 10.23 |
| Maltodextrin | - |
| Rice flour | 10.00 |
| Sunflower Lecithin | 0.40 |
| Natural vanilla aroma | 0,07 |
| Aroma identical to the natural condensed milk | 0,20 |
| Aroma identical to natural hazelnut | 0,10 |

Result: dough with good viscosity, color and odor, but final product leaving the pattern of sweetness being disapproved by the tasters.

### TEST 2.2

| **INGREDIENTS** | % |
|---|---|
| Fractionated vegetable fat of palm | 30.00 |
| Maltitol Sweetener | 35.00 |
| Coconut oil | 3.00 |
| carob powder | 10.00 |
| Polydextrose | 10.00 |
| Maltodextrin | 1.23 |
| Rice flour | 10.00 |
| Sunflower Lecithin | 0.40 |
| Natural vanilla aroma | 0,07 |
| Aroma identical to the natural condensed milk | 0.20 |
| Aroma identical to natural hazelnut | 0.10 |

Result: Dough with good viscosity, color, taste and odor for several types of applications, approved by tasters.

### TEST 2.2A

Repeated with the same formula of Test 2.2 by replacing the coconut oil for coconut milk and the same final result was obtained.

### TEST 2.2B

Repeated with the same formula of test 2.2 replacing the rice flour for rice extract and the same final result was obtained.

### TEST 2.2C

Repeated with the same formula of test 2.2B replacing the coconut milk by coconut oil and the same final result was obtained.

### TEST 2.2D

Repeated with the same formula of test 2 replacing the ice flour by powder for preparation of rice-based beverage and obtained the same final result.

### TEST 2.2E

Repeated with the same formula of the test 2.2D replacing the coconut oil by coconut milk and the same final result was obtained.

### TEST 3

| INGREDIENTS | % |
|---|---|
| Fractionated vegetable fat of palm | 30.00 |
| Maltitol Sweetener | 35.00 |
| Coconut oil | 3.00 |
| carob powder | 1.50 |
| Polydextrose | 15.00 |
| Maltodextrin | 4.73 |
| Rice flour | 10.00 |
| Sunflower Lecithin | 0.40 |
| Natural vanilla aroma | 0,07 |
| Aroma identical to the natural condensed milk | 0.20 |
| Aroma identical to natural hazelnut | 0.10 |

Result: Dough decharacterized as an alternative chocolate of carob due to the low percentage of carob. Color and flavor is nothing appealing being disapproved by tasters.

### TEST 4

| **INGREDIENTS** | % |
|---|---|
| fractionated vegetable tat ot palm | 30.00 |
| Maltitol Sweetener | 35.00 |
| Coconut oil | 3.50 |
| carob powder | 2.00 |
| Polydextrose | 14.00 |
| Maltodextrin | 4.73 |
| Rice flour | 10.00 |
| Sunflower Lecithin | 0.40 |
| Natural vanilla aroma | 0,07 |
| Aroma identical to the natural condensed milk | 0.20 |
| Aroma identical to natural hazelnut | 0.10 |

Result: Although the dough has a low percentage of carob powder, is characterized as an alternative chocolate. Good viscosity, color and soft carob flavor, being approved by tasters.

### TEST 4A

Repeated with the same formula of Test 4 replacing the coconut oil for coconut milk and the same final result was obtained.

### TEST 4B

Repeated with the same formula of test 4 replacing the rice flour by rice extract and the same final result was obtained.

### TEST 4C

Repeated with the same formula of test 4-B replacing the coconut milk by coconut oil and the same final result was obtained.

### TEST 4D

Repeated with the same formula of test 4 replacing the rice flour by powder for preparation of rice-based beverage and obtained the same final result.

### TEST 4E

Repeated with the same formula of test 4-D replacing coconut oil for coconut milk and the same final result was obtained.

### TEST 5

| **INGREDIENTS** | % |
|---|---|
| Fractionated vegetable tat of palm | 24.00 |
| Maltitol Sweetener | 35.00 |
| Coconut oil | 5.00 |
| carob powder | 10.00 |
| Polydextrose | 12.00 |
| Maltodextrin | 3.23 |
| Rice flour | 10.00 |
| Sunflower Lecithin | 0.40 |
| Natural vanilla aroma | 0,07 |
| Aroma identical to the natural condensed milk | 0.20 |
| Aroma identical to natural hazelnut | 0.10 |

Result: Dough with normal odor, taste and color, but softness is larger than desired, requiring a higher percentage of vegetable fat. Disapproved by tasters.

### TEST 6

| **INGREDIENTS** | % |
|---|---|
| fractionated vegetable tat of palm | 25.00 |
| Maltitol Sweetener | 35.00 |
| Coconut oil | 5.00 |
| carob powder | 10.00 |
| Polydextrose | 12.00 |
| Maltodextrin | 3.23 |
| Rice flour | 9.00 |
| Sunflower Lecithin | 0.40 |
| Natural vanilla aroma | 0,07 |
| Aroma identical to the natural condensed milk | 0.20 |
| Aroma identical to natural hazelnut | 0.10 |

Result: Dough with normal odor, taste and color and softness within the desired. Approved by tasters.

### TEST 6A

Repeated with the same formula of Test 6 replacing the coconut oil for coconut milk and the same final result was obtained.

### TEST 6B

Repeated with the same formula of test 6 replacing the rice flour by rice extract and obtained the same final result.

### TEST 6C

Repeated with the same formula of test 6-B replacing the coconut milk by coconut oil and the same final result was obtained.

### TEST 6D

Repeated with the same formula of test 6 replacing the rice flour by powder for preparation of rice-based beverage and obtained the same final result.

### TEST 6E

Repeated with the same formula of the test 6-D replacing the coconut oil for coconut milk and the same final result was obtained.

### TEST 7

| **INGREDIENTS** | % |
|---|---|
| fractionated vegetable tat of palm | 36.00 |
| Maltitol Sweetener | 33.50 |
| Coconut oil | 4.60 |
| carob powder | 10.00 |
| Polydextrose | 8.13 |
| Maltodextrin | - |
| Rice flour | 7.00 |
| Sunflower Lecithin | 0.40 |
| Natural vanilla aroma | 0.07 |
| Aroma identical to the natural condensed milk | 0.20 |
| Aroma identical to natural hazelnut | 0.10 |

Result: Very oily dough with no application due to high fat content. Disapproved by tasters.

### TEST 8

| **INGREDIENTS** | % |
|---|---|
| Fractionated vegetable fat of palm | 35.00 |
| Maltitol Sweetener | 32.50 |
| Coconut oil | 4.00 |
| carob powder | 10.00 |
| Polydextrose | 10.13 |
| Maltodextrin | - |
| Rice flour | 7.00 |
| Sunflower Lecithin | 0.40 |
| Natural vanilla aroma | 0.07 |
| Aroma identical to the natural condensed milk | 0.20 |
| Aroma identical to natural hazelnut | 0.10 |

Result: Dough with normal odor, taste and color and softness within the desired, ideal for toppings, baking and ice cream. Approved by tasters.

### TEST 8A

Repeated with the same formula of Test 8 replacing the coconut oil for coconut milk and the same final result was obtained.

### TEST 8B

Repeated with the same formula of test 8 replacing the rice flour by rice extract and obtained the same final result.

### TEST 8C

Repeated with the same formula of test 8-B replacing the coconut milk by coconut oil and the same final result was obtained.

### TEST 8D

Repeated with the same formula of test 8 replacing the rice flour by powder for preparation of rice-based beverage and obtained the same final result.

### TEST 8E

Repeated with the same formula of the test 8-D replacing the coconut oil for coconut milk and the same final result was obtained.

### TEST 9

| **INGREDIENTS** | % |
|---|---|
| Fractionated vegetable fat of palm | 30.00 |
| Maltitol Sweetener | 35.00 |
| Coconut oil | 0.50 |
| carob powder | 10.00 |
| Polydextrose | 12.00 |
| Maltodextrin | 6.73 |
| Rice flour | 5.00 |
| Sunflower Lecithin | 0.40 |
| Natural vanilla aroma | 0,07 |
| Aroma identical to the natural condensed milk | 0.20 |
| Aroma identical to natural hazelnut | 0.10 |

Result: Dough can be used in the formatting process, but it did not stay with the texture and *mouthfeel* desired by the low percentage of oil. The final product was disapproved by the tasters.

### TEST 10

| **INGREDIENTS** | % |
|---|---|
| Fractionated vegetable fat of palm | 30.00 |
| Maltitol Sweetener | 35.00 |
| Coconut oil | 1.50 |
| carob powder | 10.00 |
| Polydextrose | 12.00 |
| Maltodextrin | 5.73 |
| Rice flour | 5.00 |
| Sunflower Lecithin | 0.40 |
| Natural vanilla aroma | 0,07 |
| Aroma identical to the natural condensed milk | 0.20 |
| Aroma identical to natural hazelnut | 0.10 |

Result: Dough for various types of application, final product approved by the tasters, since the dough was left with the expected softness due to the adequate percentage of coconut oil.

### TEST 10A

Repeated with the same formula of Test 10 replacing the coconut oil by coconut milk and the same final result was obtained.

### TEST 10B

Repeated with the same formula of test 10 replacing the rice flour by rice extract and obtained the same final result.

### TEST 10C

Repeated with the same formula of test 10-B replacing the coconut milk by coconut oil and the same final result was obtained.

### TEST 10D

Repeated with the same formula of test 10 replacing the rice flour by powder for preparation of rice-based beverage and the same final result was obtained.

### TEST 10E

Repeated with the same formula of test 10-D replacing the coconut oil by coconut milk and the same final result was obtained.

### TEST 11

| **INGREDIENTS** | % |
|---|---|
| Fractionated vegetable fat of palm | 25.00 |
| Maltitol Sweetener | 30.00 |
| Coconut oil | 8.00 |
| carob powder | 10.00 |
| Polydextrose | 12.00 |
| Maltodextrin | 7.23 |
| Rice flour | 7.00 |
| Sunflower Lecithin | 0.40 |
| Natural vanilla aroma | 0.07 |
| Condensed milk aroma | 0.20 |
| Hazelnut aroma | 0.10 |

Result: Dough with undesired texture for formatting and much sensitive to heat and having an applicability only for ice creams. The melting point of the dough is very low. Disapproved in the formatting test.

### TEST 12

| **INGREDIENTS** | % |
|---|---|
| Fractionated vegetable fat of palm | 25.00 |
| Maltitol Sweetener | 31.00 |
| Coconut oil | 7.00 |
| carob powder | 10.00 |
| Polydextrose | 12.00 |
| Maltodextrin | 7.23 |
| Rice flour | 7.00 |
| Sunflower Lecithin | 0.40 |
| Natural vanilla aroma | 0.07 |
| Condensed milk aroma | 0.20 |
| Hazelnut aroma | 0.10 |

Result: Dough with good viscosity for formatting and not so sensitive to heat. The melting point of the moderate dough. Soft coconut flavor being approved by tasters

### TEST 12A

Repeated with the same formula of test 12 replacing the coconut oil by coconut milk and the same final result was obtained.

### TEST 12B

Repeated with the same formula of test 12 replacing the rice flour by rice extract and obtained the same final result.

### TEST 12C

Repeated with the same formula of Test 12-B replacing the coconut milk by coconut oil and the same final result was obtained.

### TEST 12D

Repeated with the same formula of test **(10)**12 replacing the rice flour by powder for preparation of rice-based beverage and the same final result was obtained.

### TEST 12E

Repeated with the same formula of test 12-D replacing the coconut oil by coconut milk and the same final result was obtained.

### TEST 13

| **INGREDIENTS** | % |
|---|---|
| Fractionated vegetable fat of palm | 30.00 |
| Maltitol Sweetener | 35.00 |
| Coconut oil | 2.00 |
| carob powder | 10.00 |
| Polydextrose | 14.50 |
| Maltodextrin | 6.73 |
| Rice flour | 1.00 |
| Sunflower Lecithin | 0.40 |
| Natural vanilla aroma | 0.07 |
| Aroma identical to the natural condensed milk | 0.20 |
| Aroma identical to natural hazelnut | 0.10 |

Result: Dough with good viscosity, but disapproved by tasters due to the low percentage of rice flour, as it gives the final product a low sensorial profile *(mothfeel).*

### TEST 14

| **INGREDIENTS** | % |
|---|---|
| Fractionated vegetable fat of palm | 30.00 |
| Maltitol Sweetener | 35.00 |
| Coconut oil | 2.00 |
| carob powder | 10.00 |
| Polydextrose | 15.00 |
| Maltodextrin | 5.23 |
| Rice flour | 2.00 |
| Sunflower Lecithin | 0.40 |
| Natural vanilla aroma | 0.07 |
| Aroma identical to the natural condensed milk | 0.20 |
| Aroma identical to natural hazelnut | 0.10 |

Result: Dough with good viscosity and flavor, soft, and can be used for several types of application, making note the use of rice flour giving a differential in dough, approved by tasters.

### TEST 14A

Repeated with the same formula of Test 14 replacing the coconut oil by coconut milk and the same final result was obtained.

### TEST 14B

Repeated with the same formula of test 14 replacing the rice flour by rice extract and obtained the same final result.

### TEST 14C

Repeated with the same formula of test 14-B replacing the coconut milk by coconut oil and the same final result was obtained.

### TEST 14D

Repeated with the same formula of test 14 replacing the rice flour by powder for preparation of rice-based beverage and the same final result was obtained.

### TEST 14E

Repeated with the same formula of test 14-D replacing the coconut oil by coconut milk and the same final result was obtained.

### TEST 15

| **INGREDIENTS** | % |
|---|---|
| Fractionated vegetable fat of palm | 30.00 |
| Maltitol Sweetener | 27.00 |
| Coconut oil | 2.00 |
| carob powder | 10.00 |
| Polydextrose | 9.23 |
| Maltodextrin | - |
| Rice flour | 21.00 |
| Sunflower Lecithin | 0.40 |
| Natural vanilla aroma | 0.07 |
| Aroma identical to the natural condensed milk | 0.20 |
| Aroma identical to natural hazelnut | 0.10 |

Result: Sandy dough, rigid and with a pronounced flavor of rice, with difficulty in the productive process, disapproved by the tasters.

### TEST 16

| **INGREDIENTS** | % |
|---|---|
| Fractionated vegetable fat of palm | 30.00 |
| Maltitol Sweetener | 27.00 |
| Coconut oil | 2.00 |
| carob powder | 10.00 |
| Polydextrose | 10.23 |
| Maltodextrin | - |
| Rice flour | 20.00 |
| Sunflower Lecithin | 0.40 |
| Natural vanilla aroma | 0.07 |
| Aroma identical to the natural condensed milk | 0.20 |
| Aroma identical to natural hazelnut | 0.10 |

Result: Dough with normal odor, taste and color and softness within the desired, ideal for baking and coating applications. Approved by tasters.

### TEST 16A

Repeated with the same formula of test 16 replacing the coconut oil by coconut milk and the same final result was obtained.

### TEST 16B

Repeated with the same formula of test 16 replacing the rice flour by rice extract and obtained the same final result.

### TEST 16C

Repeated with the same formula of test 16-B replacing the coconut milk by coconut oil and the same final result was obtained.

### TEST 16D

Repeated with the same formula of test 16 replacing the rice flour by powder for preparation of rice-based beverage and the same final result was obtained.

### TEST 16E

Repeated with the same formula of test 16-D replacing the coconut oil by coconut milk and the same final result was obtained.

### TEST 17

| **INGREDIENTS** | % |
|---|---|
| Fractionated vegetable fat of palm | 30.00 |
| Maltitol Sweetener | 35.00 |
| Coconut oil | 3.00 |
| carob powder | 10.00 |
| Polydextrose | 0.00 |
| Maltodextrin | 11.23 |
| Rice flour | 10.00 |
| Sunflower Lecithin | 0.40 |
| Natural vanilla aroma | 0.07 |
| Aroma identical to the natural condensed milk | 0.20 |
| Aroma identical to natural hazelnut | 0.10 |

Result: Dough with good viscosity, for various types of application, approved without the appeal of fibers.

### TEST 18

| **INGREDIENTS** | % |
|---|---|
| Fractionated vegetable fat of palm | 30.00 |
| Maltitol Sweetener | 30.00 |
| Coconut oil | 3.00 |
| carob powder | 10.00 |
| Polydextrose | 21.00 |
| Maltodextrin | - |
| Rice flour | 5.23 |
| Sunflower Lecithin | 0.40 |
| Natural vanilla aroma | 0.07 |
| Aroma identical to the natural condensed milk | 0.20 |
| Aroma identical to natural hazelnut | 0.10 |

Result: Hard, sandy dough and with excess fiber preventing a good dough-production processing, with difficult application. Disapproved by tasters.

### TEST 19

| **INGREDIENTS** | % |
|---|---|
| Fractionated vegetable fat of palm | 30.00 |
| Maltitol Sweetener | 30.00 |
| Coconut oil | 4.00 |
| Carob | 10.00 |
| Polydextrose | 20.00 |
| Maltodextrin | - |
| Rice flour | 5.23 |
| Sunflower Lecithin | 0.40 |
| Natural vanilla aroma | 0.07 |
| Aroma identical to the natural condensed milk | 0.20 |
| Aroma identical to natural hazelnut | 0.10 |

Result: Dough with normal odor, taste and color and softness within the desired, ideal for toppings and baking. Although presenting a fibrous product, no difficulty was found in the production process. Approved by tasters.

### TEST 19A

Repeated with the same formula of test 19 replacing the coconut oil by coconut milk and the same final result was obtained.

### TEST 19B

Repeated with the same formula of test 19 replacing the rice flour by rice extract and obtained the same final result.

### TEST 19C

Repeated with the same formula of test 19-B replacing the coconut milk by coconut oil and the same final result was obtained.

### TEST 19D

Repeated with the same formula of test 19 replacing the rice flour by powder for preparation of rice-based beverage and the same final result was obtained.

### TEST 19E

Repeated with the same formula of test 19-D replacing the coconut oil by coconut milk and the same final result was obtained.

Formula (I) preferred by tasters in percentage by weight is the following:

| **INGREDIENTS** | % |
|---|---|
| Fractionated vegetable fat of palm | 30.00 |
| Maltitol Sweetener | 30.00 |
| Coconut oil | 2.00 |
| carob powder | 10.00 |
| Polydextrose | 12.00 |
| Maltodextrin | 0.23 |
| Rice flour | 15.00 |
| Sunflower Lecithin | 0.40 |
| Natural vanilla aroma | 0.07 |
| Aroma identical to the natural condensed milk | 0.20 |
| Aroma identical to natural hazelnut | 0.10 |

Depending on the tests carried out, it is concluded that formula (I) of the present invention has the following composition at % by weight:
2 to 65 % of carob powder;
25 to 35 % of Fractionated vegetable fat from palm
2 to 7 % of Coconut Fat chosen from Coconut Oil and/or Coconut Milk
0 to 35 % of Maltitol Sweetener;
2 to 20 % of Rice Derivative, chosen from Rice Flour,
Rice Extract and Powder for Rice Beverage Preparation;
0 to 20 % of Maltodextrin;
0 to 20 % of Polydextrose;
0.40 % of Sunflower Lecithin;
0.20 % of aroma identical to the natural condensed milk;
0.07 % of aroma identical to the natural vanilla; and
0.10 % of aroma identical to the natural hazelnut.

An alternative chocolate of carob without milk (lactose-free and without milk proteins), no added sugar, gluten-free, soy-free and fiber-based products, made with the preferred formula (I) of the present invention has the following average nutritional characteristics (in 100 g of product): Energy Value 454 kcal = 1907 kJ; Carbohydrates 49g, including: Sugars 2.6g; Polyols 30g; Starch 12g; Other carbohydrates 4.1g; Proteins 1.6g; Total Fat 32g, including: Saturated Fats 30g; Trans Fats 0g; Monounsaturated Fats 0.2g; Polyunsaturated Fats 0g; Cholesterol 0g; Neutral Fats 1,8g; Food Fiber 15g; Sodium 5.3mg.

Although the formula (I) obtained by the initial research has reached the established objectives, the researches continued and included the searches of new ingredients with new characteristics as was the case of ingredients with low Glycemic Index (GI) to obtain a product with adequate Glycemic Load (GL) of the food. The Glycemic Index only indicates the rate of absorption of carbohydrates regardless of the amount of the portion. The Glycemic Load makes this evaluation taking into account the different amounts and quality of carbohydrates present in the ingredients used.

The sweet potato is a complex carbohydrate with a low glycemic index, that is, its absorption by the body is slower, gradually releasing the glucose into the blood stream and without greatly stimulating insulin (hormone responsible for increased hunger and accumulation of fat), its substitution in the formulation brings significant nutritional benefits to the human body.

The sweet potato tuber is rich in fiber, and has a source of iron, vitamins E, A and C and potassium. Sweet potatoes also have a good amount of calcium, much higher than maltodextrin and a much higher amount of fiber than rice flour.

The sweet potato is one of the most popular tubers in Brazil, therefore, the industries have already made the processing to obtain the sweet potato powder, which has complex carbohydrate of low glycemic index, rich in fiber, iron, vitamin C and potassium. Sweet potato powder provides high vitamin content and phenolic compounds that act as an antioxidant protecting the body from certain chronic diseases such as cardiovascular. Due to its low glycemic index, potato flour is a coadjuvant in the diet-therapy treatment of people who need to control sugar consumption, especially of diabetics.

**Ingredients Comparison Table**

| | Nutritional Information per 100g | | |
|---|---|---|---|
| | Maltodextrin | Rice Flour | Sweet Potato Flour |
| Energy value (kcal) | 380.00 | 380.00 | 329.39 |
| Carbohydrates, of which: | 95.00 | 80.00 | 73.63 |
| Sugars (g) | 9.00-13.00 | 0.12 | 17.98 |
| Polyols (g) | 0 | 0 | 0 |
| Starch (g) | 0 | 79.88 | 55.65 |
| Other carbohydrates (g) | 82.00-86.00 | 0 | 0 |
| Proteins (g) | <0.10 | 7.50 | 6.85 |
| Total fats (g) | 0 | 0.60 | 0.83 |
| Saturated tats (g) | 0 | 0.10 | 0 |
| Trans fats *(g)* | 0 | 0 | 0 |
| Food fiber (g) | 0 | 0.50 | 9.92 |
| Sodium (mg) | <100 | 5.00 | 233.30 |
| Glycemic index | 100 | - | 44.00 |

In the further researches performed to improve and update the formula (I) of the present invention, sweet potato flour was used maintaining the rice derivatives and the following tests were carried out to obtain formula (II) with the following results in weight percent:

### TEST 20

| **INGREDIENTS** | % |
|---|---|
| Fractionated fat | 28.00 |
| Maltitol Sweetener | 25.00 |
| Coconut oil | 2.00 |
| carob powder | 10.00 |
| Polydextrose | 15.00 |
| Maltodextrin | 6.73 |
| Sweet Potato Flour | 1.00 |
| Rice flour | 11.50 |
| Sunflower Lecithin | 0.40 |
| Natural vanilla aroma | 0.07 |
| Aroma identical to the natural condensed milk | 0.20 |
| Aroma identical to natural hazelnut | 0.10 |

Result: Dough with good viscosity and flavor, for various types of application, not meeting expectations as sweetness using sweet potato flour. The final product was disapproved by the tasters.

### TEST 21

| **INGREDIENTS** | % |
|---|---|
| Fractionated fat | 28.50 |
| Maltitol Sweetener | 25.00 |
| Coconut oil | 2.00 |
| carob powder | 10.00 |
| Polydextrose | 15.00 |
| Maltodextrin | 7.23 |
| Sweet Potato Flour | 2.00 |
| Rice flour | 9.50 |
| Sunflower Lecithin | 0.40 |
| Natural vanilla aroma | 0.07 |
| Aroma identical to the natural condensed milk | 0.20 |
| Aroma identical to natural hazelnut | 0.10 |

Result: Dough with good viscosity and flavor, for all types of applications. Approved by tasters.

### TEST 21A

Repeated with the same formula of test 21 replacing the coconut oil by coconut milk and the same final result was obtained.

### TEST 21B

Repeated with the same formula of test 21 replacing the rice flour by rice extract and obtained the same final result.

### TEST 21C

Repeated with the same formula of test 21-B replacing the coconut milk by coconut oil and the same final result was obtained.

### TEST 21D

Repeated with the same formula of test 21 replacing the rice flour by powder for preparation of rice-based beverage and the same final result was obtained.

### TEST 21E

Repeated with the same formula of test 21-D replacing the coconut oil by coconut milk and the same final result was obtained.

### TEST 22

| **INGREDIENTS** | % |
|---|---|
| Fractionated fat of palm | 29.00 |
| Maltitol Sweetener | 28.00 |
| Coconut oil | 2.00 |
| carob powder | 10.00 |
| Polydextrose | 4.23 |
| Maltodextrin | - |
| Sweet Potato Flour | 21.00 |
| Rice flour | 5.00 |
| Sunflower Lecithin | 0.40 |
| Natural vanilla aroma | 0.07 |
| Aroma identical to the natural condensed milk | 0.20 |
| Aroma identical to natural hazelnut | 0.10 |

Result: Dough with undesired texture (viscosity) for formatting, fibrous and hard, with difficulty in the refining process, disapproved in the production process and on an industrial scale.

### TEST 23

| INGREDIENTS | % |
|---|---|
| Fractionated fat of palm | 29.00 |
| Maltitol Sweetener | 28.00 |
| Coconut oil | 2.00 |
| carob powder | 10.00 |
| Polydextrose | 5.23 |
| Maltodextrin | - |
| Sweet Potato Flour | 20.00 |
| Rice flour | 5.00 |
| Sunflower Lecithin | 0.40 |
| Natural vanilla aroma | 0.07 |
| Aroma identical to the natural condensed milk | 0.20 |
| Aroma identical to natural hazelnut | 0.10 |

Result: Dough with normal color, odor and taste and desired texture for formatting. Approved by production process and the tasters.

### TEST 23A

Repeated with the same formula of test 23 replacing the coconut oil for coconut milk and the same final result was obtained.

### TES 23B

Repeated with the same formula of test 23 replacing the rice flour by rice extract and obtained the same final result.

### TEST 23C

Repeated with the same formula of test 23-B replacing the coconut milk by coconut oil and the same final result was obtained.

### TEST 23D

Repeated with the same formula of test 23 replacing the rice flour by powder for preparation of rice-based beverage and the same final result was obtained.

### TEST 23E

Repeated with the same formula of test 23-D replacing the coconut oil by coconut milk and the same final result was obtained.

The preferred formula **(II)** by tasters in percentage in weight was as follows:

| **INGREDIENTS** | % |
|---|---|
| Fractionated vegetable fat of palm | 30.00 |
| Maltitol Sweetener | 25.00 |
| Coconut oil | 2.00 |
| carob powder | 10.00 |
| Polydextrose | 12.23 |
| Malto dextrin | - |
| Rice flour | 10.00 |
| Sweet Potato Flour | 10.00 |
| Sunflower Lecithin | 0.40 |
| Natural vanilla aroma | 0.07 |
| Aroma identical to the natural condensed milk | 0.20 |
| Aroma identical to natural hazelnut | 0.10 |

On the basis of the tests carried out, it is concluded that formula **(II)** with sweet potatoes and rice derivatives of the present invention has the following composition in % in weight:
2 to 65 % of carob powder;
25 to 35 % of fractionated vegetable fat from palm;
2 to 7 % of Coconut Fat chosen from Coconut Oil and/or Coconut Milk;
0 to 35 % of Maltitol Sweetener;
2 to 20 % of Rice Derivative, chosen from Rice Flour,

Rice Extract and Powder for Rice Beverage Preparation;
2 to 20 % of Sweet Potato Flour;
0 to 20 % of Maltodextrin;
0 to 20 % of Polydextrose;
0.40% of Sunflower Lecithin;
0.20 % of aroma identical to the natural condensed milk;
0.07 % of aroma identical to the natural vanilla; and
0.10 % of aroma identical to the natural hazelnut.

An alternative chocolate of carob without milk (lactose-free and withoutmilk proteins), no added sugar, gluten-free, soy-free and fiber-based products using sweet potato and rice derivatives, manufactured with the preferred formula **(II)** of the present invention has the following average nutritional characteristics (in 100g of product): Energy Value 457kcal = 1919 kJ; Carbohydrates 47g, among which: Sugars 5.4g; Polyols 25g; Starch 11g; Other carbohydrates 5.3g; Proteins 1.3g; Total Fat 33g, including: Saturated Fats 30g; Trans Fats 0g; Monounsaturated Fats 0g; Polyunsaturated Fats 0g; Cholesterol 0g; Neutral Fats 3g; Food Fiber 16g; Sodium 28mg;

In addition, alternative research was carried out on the present formula (II) of the present patent using sweet potato by fully replacing the rice derivatives for sweet potato flour, using the same complementary ingredients as tests 13, 14, 14A, 14B, 14C , 14D,14E, 15, 16, 16A, 16B, 16C, 16D and 16E and the same results were obtained and forming the formula (III).

The preferred formula (III) by tasters in percentage in weight was as follows:

| **INGREDIENTS** | % |
|---|---|
| Fractionated vegetable fat of palm | 30.00 |
| Maltitol Sweetener | 28.00 |
| Coconut oil | 2.00 |
| Locust powder | 12.00 |
| Polydextrose | 12.23 |
| Maltodextrin | - |
| Sweet Potato Flour | 15.00 |
| Sunflower Lecithin | 0.40 |
| Natural vanilla aroma | 0.07 |
| Aroma identical to the natural condensed milk | 0.20 |
| Aroma identical to natural hazelnut | 0.10 |

On the basis of the tests carried out, it is concluded that formula (III) with sweet potato entirely replacing rice derivatives of the present invention has the following composition in % in weight: 2 to 65 % of carob powder;
25 to 35 % of fractionated vegetable fat from palm;
2 to 7 % of Coconut Fat chosen from Coconut Oil and/or Coconut Milk;
0 to 35 % of Maltitol Sweetener;
2 to 20 % of Sweet Potato Flour;
0 to 20 % of Maltodextrin;
0 to 20 % of Polydextrose;
0.40 % of Sunflower Lecithin;
0.20 % of aroma identical to the natural condensed milk;
0.07 % of aroma identical to the natural vanilla; and
0.10 % of aroma identical to the natural hazelnut.

An alternative chocolate of carob without milk (lactose-free and without milk proteins), no added sugar, gluten-free, soy-free and fiber-based products using sweet potato flour instead of rice derivatives, manufactured with the preferred formula (III) of the present invention has the following average nutritional characteristics (in 100g of Product): Energy Value 450 kcal = 1890 kJ; Carbohydrates 46g, among which: Sugars 7.2g; Polyols 28g; Starch 4.5g; Other carbohydrates 6.8g; Proteins 0.6g; Total Fat 32g, including: Saturated Fats 30g; Trans Fats 0g; Monounsaturated Fats 0g;

Polyunsaturated Fats 0g; Cholesterol 0g; Neutral Fats 2g; Food Fiber 17g; Sodium 40mg.

Recently with the emergence on the market of the ingredients of low glycemic index of carob and coconut sugar that can replace sweeteners, alternative formulas have been researched with these new ingredients.

In the researches carried out in addition to improving and updating the formulations of the present patent, the following tests were performed with carob sugar and coconut sugar which obtained formula (IV) with the following results in percent in weight:

### TEST 24

| **INGREDIENTS** | % |
|---|---|
| Fractionated vegetable fat of palm | 28.00 |
| carob sugar | 55.00 |
| Maltitol Sweetener | 0.00 |
| Coconut oil | 2.00 |
| carob powder | 10.00 |
| Polydextrose | - |
| Maltodextrin | - |
| Sweet Potato Flour | 2.23 |
| Rice flour | 2.00 |
| Sunflower Lecithin | 0.40 |
| Natural vanilla aroma | 0.07 |
| Aroma identical to the natural condensed milk | 0.20 |
| Aroma identical to natural hazelnut | 0.10 |

Result: Dough with good viscosity, but the dough remained with sweetness high. Disapproved by tasters.

### TEST 25

| **INGREDIENTS** | % |
|---|---|
| Fractionated vegetable fat of palm | 28.00 |
| carob sugar | 50.00 |
| Maltitol Sweetener | 0.00 |
| Coconut oil | 2.00 |
| carob powder | 10.00 |
| Polydextrose | - |
| Maltodextrin | - |
| Sweet Potato Flour | 4.00 |
| Rice flour | 5.23 |
| Sunflower Lecithin | 0.40 |
| Natural vanilla aroma | 0.10 |
| Aroma identical to the natural condensed milk | 0.20 |
| Aroma identical to natural hazelnut | 0.07 |

Result: Dough with good viscosity, for all types of applications and with the desired sweetness, but it can not be used with appeal without addition of sugars, approved by tasters.

### TEST 25A

Repeated with the same formula of test 25 replacing the coconut oil for coconut milk and the same final result was obtained.

### TEST 25B

Repeated with the same formula of test 25 replacing the rice flour by rice extract and obtained the same final result.

### TEST 25C

Repeated with the same formula of test 25-B replacing the coconut milk by coconut oil and the same final result was obtained.

### TEST 25D

Repeated with the same formula of test 25 replacing the rice flour by powder for preparation of rice-based beverage and the same final result was obtained.

### TEST 25E

Repeated with the same formula as the test 25-D replacing the coconut oil by coconut milk and the same final result was obtained.

### TEST 26

| **INGREDIENTS** | % |
|---|---|
| Fractionated vegetable tat of palm | 30.00 |
| carob sugar | 1.50 |
| Maltitol Sweetener | 0.00 |
| Coconut oil | 2.00 |
| carob powder | 12.00 |
| Polydextrose | 12.00 |
| Maltodextrin | 11.73 |
| Sweet Potato Flour | 15.00 |
| Rice flour | 15.00 |
| Sunflower Lecithin | 0.40 |
| Natural vanilla aroma | 0.07 |
| Aroma identical to the natural condensed milk | 0.20 |
| Aroma identical to natural hazelnut | 0.10 |

Result: Dough with good viscosity, color, odor and flavor and for various types of applications. With low sweetness, disapproved by the tasters.

### TEST 27

| **INGREDIENTS** | % |
|---|---|
| Fractionated vegetable fat of palm | 30.00 |
| carob sugar | 2.00 |
| Maltitol Sweetener | 0.00 |
| Coconut oil | 2.00 |
| carob powder | 12.00 |
| Polydextrose | 12.00 |
| Maltodextrin | 11.23 |
| Sweet Potato Flour | 2.00 |
| Rice flour | 2.00 |
| Sunflower Lecithin | 0.40 |
| Natural vanilla aroma | 0.07 |
| Aroma identical to the natural condensed milk | 0.20 |
| Aroma identical to natural hazelnut | 0.10 |

Result: Dough with good viscosity, color, odor and flavor and for all types of applications. With sweetness approved by tasters, however, they cannot use the "no added sugars" appeal.

### TEST 27A

Repeated with the same formula of test 27 replacing the coconut oil by coconut milk and the same final result was obtained.

### TEST 27B

Repeated with the same formula of test 27 replacing the rice flour by rice extract and obtained the same final result.

### TEST 27C

Repeated with the same formula of test 27-B replacing the coconut milk by coconut oil and the same final result was obtained.

### TEST 27D

Repeated with the same formula of test 27 replacing the rice flour by powder for preparation of rice-based beverage and the same final result was obtained.

### TEST 27E

Repeated with the same formula of test 27-D replacing the coconut oil by coconut milk and the same end result was obtained.

### TEST 28

| **INGREDIENTS** | % |
|---|---|
| Fractionated vegetable tat of palm | 30.00 |
| Carob sugar | 2.00 |
| Maltitol Sweetener | 33.00 |
| Coconut oil | 2.00 |
| carob powder | 10.00 |
| Polydextrose | 8.23 |
| Maltodextrin | - |
| Sweet Potato Flour | 7.00 |
| Rice flour | 7.00 |
| Sunflower Lecithin | 0.40 |
| Natural vanilla aroma | 0.07 |
| Aroma identical to the natural condensed milk | 0.20 |
| Aroma identical to natural hazelnut | 0.10 |

Result: Dough with good viscosity, color, odor and taste and for all types of applications. With sweetness approved by tasters, however, they cannot use the "no added sugars" appeal.

### TEST 28A

Repeated with the same formula of test 28 replacing the coconut oil by coconut milk and the same final result was obtained.

### TEST 28B

Repeated with the same formula of test 28 replacing the rice flour by rice extract and obtained the same final result.

### TEST 28C

Repeated with the same formula of test 28-B replacing the coconut milk by coconut oil and the same final result was obtained.

### TEST 28D

Repeated with the same formula of test 28 replacing the rice flour by powder for preparation of rice-based beverage and the same final result was obtained.

### TEST 28E

Repeated with the same formula of test 28-D replacing the coconut oil by coconut milk and the same final result was obtained.

In the tests the preferred formula (IV) by tasters in percentage in weight is the following:

| **INGREDIENTS** | % |
|---|---|
| Fractionated vegetable fat of palm | 30.00 |
| Carob sugar | 30.00 |
| Maltitol Sweetener | - |
| Coconut oil | 2.00 |
| Carob powder | 12.00 |
| Polydextrose | - |
| Maltodextrin | - |
| Sweet Potato Flour | 12.63 |
| Rice flour | 12.60 |
| Sunflower Lecithin | 0.40 |
| Natural vanilla aroma | 0,07 |
| Aroma identical to the natural condensed milk | 0.20 |
| Aroma identical to natural hazelnut | 0.10 |

On basis of the tests performed, with carob sugar or coconut sugar it is concluded that formula (IV) of the present invention has the following composition: carob sugar and coconut sugar;
2 to 65 % of carob powder;
25 to 35 % of fractionated vegetable fat from palm;
2 to 45 % of low glycemic index sugars selected from
0 to 33 % of Maltitol Sweetener;
2 to 7 % of Coconut Fat chosen from Coconut Oil and/or Coconut Milk;
2 to 20 % of Rice Derivative, chosen from Rice Flour,

Rice Extract and Powder for Rice Beverage Preparation;
2 to 20 % of Sweet Potato Flour;
0 to 25 % of Maltodextrin;
0 to 20 % of Polydextrose;
0.40 % of Sunflower Lecithin;
0.20 % of aroma identical to the natural condensed milk;
0.07 % natural vanilla aroma; and
0.10 % of aroma identical to the natural hazelnut.

An alternative chocolate of carob without milk (lactose-free and without milk proteins), no added sugar, gluten-free, soy-free and fiber-based products, manufactured with the preferred formula (IV) of the present invention has the following average nutritional characteristics (in 100 g of product): Energy Value 529 kcal = 2222 kJ; Carbohydrates 56g, among which: Sugars 36g; Polyols 0g; Starch 14g; Other carbohydrates 6.5g; Proteins 1.5g; Total Fat 33g, including: Saturated Fats 30g; Trans fats 0g.

Monounsaturated Fats 0.2g; Polyunsaturated Fats 0g; Cholesterol 0g; Neutral Fats 2.8g; Food Fiber 5,6g; Sodium 34mg;

## Claims

1. "Optimized formulation of alternative chocolate of carob without milk, with or without added sugar, gluten-free, without soy and with or without fibers", with 0.40% of sunflower lecithin, 0.20% of aroma similar to the natural condensed milk, 0.07% of natural vanilla aroma and 0.10% of hazelnut natural aroma, **characterized in that** it additionally contains:
2 to 65 % of carob powder;
25 to 35 % of fractionated vegetable fat from palm;
2 to 45 % of low glycemic index sugars selected from carob sugar and coconut sugar.
0 to 33 % of maltitol sweetener;
2 to 7 % of coconut fat chosen from coconut oil and coconut milk;
2 to 20 % of rice derivative, chosen from rice flour, rice extract and powder for rice beverage preparation;
2 to 20 % of sweet potato flour;
0 to 11.23 % of maltodextrin; and
0 to 20 % of polydextrose.

2. "Optimized formulation of alternative chocolate of carob without milk, with or without added sugar, gluten-free, without soy and with or without fibers", according to claim 1, with 0.40% of sunflower lecithin, 0.20% of aroma identical to the natural condensed milk, 0.07% natural aroma of vanilla and 0.10% natural aroma of hazelnut, **characterized in that** the preferred formula additionally contains: 12% of carob powder; 30% of fractionated vegetable fat from palm; 30% of carob sugar; 2% of coconut oil; 12.60% of rice flour; and 12.63% of sweet potato flour.

3. "Optimized formulation of alternative chocolate of carob without milk, with or without added sugar, gluten-free, without soy and with or without fibers", with 0.40% of sunflower lecithin, 0.20% of aroma identical to that of natural condensed milk, 0.07% of natural vanilla aroma and 0.10% of natural aroma of hazelnut, **characterized in that** it additionally contains:
2 to 65 % of carob powder;
25 to 35 % of fractionated vegetable fat from palm;
2 to 7 % of coconut fat chosen from coconut oil and coconut milk;
0 to 35 % of maltitol sweetener;
2 to 20 % of sweet potato flour;
0 to 11.23 % of maltodextrin; and
0 to 20 % of polydextrose.

4. "Optimized formulation of alternative chocolate of carob without milk, with or without added sugar, gluten-free, without soy and with or without fibers", according to claim 3, with 0.40% of sunflower lecithin, 0.20% of aroma identical to that of natural condensed milk, 0.07% of natural vanilla aroma and 0.10% of natural hazelnut aroma, **characterized in that** the preferred formula additionally contains: 12% of carob powder; 30% of fractionated vegetable fat from palm; 28 % of maltitol sweetener; 2% of coconut oil; 12.23% of polydextrose; and 15 % of sweet potato flour.

5. "Optimized formulation of alternative chocolate of carob without milk, with or without added sugar, gluten-free, without soy and with or without fibers", with 0,40% of sunflower lecithin, 0,20% of aroma identical to the natural condensed milk, 0.07% of natural vanilla aroma and 0.10% of natural aroma of hazelnut, **characterized in that** it additionally contains:
2 to 65 % of carob powder;
25 to 35 % of fractionated vegetable fat from palm;
2 to 7 % of coconut fat chosen from coconut oil and coconut milk;
0 to 35 % of maltitol sweetener;
2 to 20 % of rice derivative, chosen from rice flour, rice extract and powder for rice beverage preparation;
2 to 20 % of sweet potato flour;
0 to 11.23 % of maltodextrin; and
0 to 20 % of polydextrose.

6. "Optimized formulation of alternative chocolate of carob without milk, with or without added sugar, gluten-free, without soy and with or without fibers", according to claim 5, with 0.40% of sunflower lecithin, 0.20% aroma identical to the natural condensed milk, 0.07% of natural vanilla aroma and 0.10% of natural aroma of hazelnut, **characterized in that** the preferred formula additionally contains: 10% carob powder; 30% of fractionated vegetable fat from palm; 25% of maltitol sweetener; 2% of coconut oil; 12.23% of polydextrose; 10% of rice flour; and 10% of sweet potato flour.

7. "Optimized formulation of alternative chocolate of carob without milk, with or without added sugar, gluten-free, without soy and with or without fibers", with 0.40% of sunflower lecithin, 0.20% of aroma identical to the natural condensed milk, 0.07% of natural vanilla aroma and 0.10% of natural aroma of hazelnut, **characterized in that** it additionally contains:
2 to 65 % of carob powder;
25 to 35 % of fractionated vegetable fat from palm
2 to 7 % of coconut fat chosen from coconut oil and coconut milk;
0 to 35 % of maltitol sweetener;
2 to 20 % of rice derivative, chosen from rice flour, rice extract and powder for rice beverage preparation;
0 to 20 % of maltodextrin; and
0 to 11.23 % of polydextrose.

8. "Optimized formulation of alternative chocolate of carob without milk, with or without added sugar, gluten-free, without soy and with or without fibers", according to claim 7, with 0.40% of sunflower lecithin, 0.20% of aroma identical to the natural condensed milk, 0.07% of natural vanilla aroma and 0.10% of natural aroma of hazelnut, **characterized in that** the preferred formula additionally contains: 10% of carob powder; 30% of fractionated vegetable fat from palm; 30% of maltitol sweetener; 2% of coconut oil; 12% of polydextrose; 0.23% of maltodextrin; and 15% rice flour.

## Patentansprüche

1. "Optimierte Formulierung für alternative Johannisbrotschokolade ohne Milch, mit oder ohne zusätzlichem Zucker, glutenfrei, ohne Soja und mit oder ohne Ballaststoffen", mit 0,40% Sonnenblumenlecithin, 0,20% Aromastoff ähnlich natürlich kondensierter Milch, 0,07% natürliches Vanillearoma und 0,10% natürliches Haselnuss-Aroma, **dadurch gekennzeichnet, dass** diese zusätzlich enthält:
2 bis 65 % Johannisbrotpulver;
25 bis 35 % fraktioniertes pflanzliches Fett aus Palm;
2 bis 45 % von Zuckern mit niedrigem glykämischem Index, ausgewählt aus Johannisbrotzucker und Kokosnusszucker
0 bis 33 % Maltitolsüßmittel;
2 bis 7 % Kokosnussfett, gewählt aus Kokosnussöl und Kokosmilch;
2 bis 20 % eines Reisderivats, gewählt aus Reismehl, Reisextrakt und Pulver zur Reisgetränkzubereitung;
2 bis 20 % Batatemehl;
0 bis 11,23 % Maltodextrin; und
0 bis 20 % Polydextrose.

2. "Optimierte Formulierung für alternative Johannisbrotschokolade ohne Milch, mit oder ohne zusätzlichem Zucker, glutenfrei, ohne Soja und mit oder ohne Ballaststoffen", nach Anspruch 1, mit 0,40% Sonnenblumenlecithin, 0,20% Aromastoff identisch natürlich kondensierter Milch, 0,07 % natürlichem Vanillearoma und 0,10 % natürlichem Haselnuss-Aroma, **dadurch gekennzeichnet, dass** die bevorzugte Formel zusätzlich enthält: 12 % Johannisbrotpulver; 30 % fraktioniertes pflanzliches Fett aus Palm; 30 % Johannisbrotzucker; 2 % Kokosöl; 12,60 % Reismehl; und 12,63 % Batatemehl.

3. "Optimierte Formulierung für alternative Johannisbrotschokolade ohne Milch, mit oder ohne zusätzlichem Zucker, glutenfrei, ohne Soja und mit oder ohne Ballaststoffen", mit 0,40% Sonnenblumenlecithin, 0,20% Aromastoff identisch desjenigen von natürlich kondensierter Milch, 0,07% natürliches Vanillearoma und 0,10% natürliches Aroma von Haselnuss, **dadurch gekennzeichnet, dass** diese zusätzlich enthält:
2 bis 65 % Johannisbrotpulver;
25 bis 35 % fraktioniertes pflanzliches Fett aus Palm;
2 bis 7 % Kokosnussfett, gewählt aus Kokosnussöl und Kokosmilch;
0 bis 35 % Maltitolsüßmittel;
2 bis 20 % Batatemehl;
0 bis 11,23 % Maltodextrin; und 0 bis 20 % Polydextrose.

4. "Optimierte Formulierung für alternative Johannisbrotschokolade ohne Milch, mit oder ohne zusätzlichem Zucker, glutenfrei, ohne Soja und mit oder ohne Ballaststoffen", nach Anspruch 3, mit 0,40% Sonnenblumenlecithin, 0,20% Aromastoff identisch desjenigen von natürlich kondensierter Milch, 0,07% natürliches Vanillearoma und 0,10% natürliches Haselnuss-Aroma, **dadurch gekennzeichnet, dass** die bevorzugte Formel zusätzlich enthält: 12 % Johannisbrotpulver; 30 % fraktioniertes pflanzliches Fett aus Palm; 28 % Maltitolsüßmittel; 2 % Kokosöl; 12,23 % Polydextrose; und 15 % Batatemehl.

5. "Optimierte Formulierung für alternative Johannisbrotschokolade ohne Milch, mit oder ohne zusätzlichem Zucker, glutenfrei, ohne Soja und mit oder ohne Ballaststoffen", mit 0,40% Sonnenblumenlecithin, 0,20% Aromastoff identisch natürlich kondensierter Milch, 0,07% natürliches Vanillearoma und 0,10% natürliches Aroma von Haselnuss, **dadurch gekennzeichnet, dass** diese zusätzlich enthält:
2 bis 65 % Johannisbrotpulver;
25 bis 35 % fraktioniertes pflanzliches Fett aus Palm;
2 bis 7 % Kokosnussfett, gewählt aus Kokosnussöl und Kokosmilch;
0 bis 35 % Maltitolsüßmittel;
2 bis 20 % eines Reisderivats, gewählt aus Reismehl, Reisextrakt und Pulver zur Reisgetränkzubereitung;
2 bis 20 % Batatemehl;
0 bis 11,23 % Maltodextrin; und
0 bis 20 % Polydextrose.

6. "Optimierte Formulierung für alternative Johannisbrotschokolade ohne Milch, mit oder ohne zusätzlichem Zucker, glutenfrei, ohne Soja und mit oder ohne Ballaststoffen", nach Anspruch 5 mit 0,40% Sonnenblumenlecithin, 0,20% Aromastoff identisch natürlich kondensierter Milch, 0,07% natürliches Vanillearoma und 0,10% natürliches Aroma von Haselnuss, **dadurch gekennzeichnet, dass** die bevorzugte Formel zusätzlich enthält: 10 % Johannisbrotpulver; 30 % fraktioniertes pflanzliches Fett aus Palm; 25 % Maltitolsüßmittel; 2 % Kokosöl; 12,23 % Polydextrose; 10 % Reismehl; und 10 % Batatemehl.

7. "Optimierte Formulierung für alternative Johannisbrotschokolade ohne Milch, mit oder ohne zusätzlichem Zucker, glutenfrei, ohne Soja und mit oder ohne Ballaststoffen", mit 0,40% Sonnenblumenlecithin, 0,20% Aromastoff identisch natürlich kondensierter Milch, 0,07% natürliches Vanillearoma und 0,10% natürliches Aroma von Haselnuss, **dadurch gekennzeichnet, dass** diese zusätzlich enthält:
2 bis 65 % Johannisbrotpulver;
25 bis 35 % fraktioniertes pflanzliches Fett aus Palm
2 bis 7 % Kokosnussfett, gewählt aus Kokosnussöl und Kokosmilch;
0 bis 35 % Maltitolsüßmittel;
2 bis 20 % eines Reisderivats, gewählt aus Reismehl, Reisextrakt und Pulver zur Reisgetränkzubereitung;
0 bis 20 % Maltodextrin; und
0 bis 11,23 % Polydextrose.

8. "Optimierte Formulierung für alternative Johannisbrotschokolade ohne Milch, mit oder ohne zusätzlichem Zucker, glutenfrei, ohne Soja und mit oder ohne Ballaststoffen", nach Anspruch 7 mit 0,40% Sonnenblumenlecithin, 0,20% Aromastoff identisch natürlich kondensierter Milch, 0,07% natürliches Vanillearoma und 0,10% natürliches Aroma von Haselnuss, **dadurch gekennzeichnet, dass** die bevorzugte Formel zusätzlich enthält: 10 % Johannisbrotpulver; 30 % fraktioniertes pflanzliches Fett aus Palm; 30 % Maltitolsüßmittel; 2 % Kokosöl; 12 % Polydextrose; 0,23 % Maltodextrin; und 15 % Reismehl.

## Revendications

1. « Formulation optimisée de chocolat alternatif de caroube sans lait, avec ou sans sucre ajouté, sans gluten, sans soja et avec ou sans fibres », avec 0,40 % de lécithine de tournesol, 0,20 % d'arôme similaire au lait condensé naturel, 0,07 % d'arôme naturel de vanille et 0,10% d'arôme naturel de noisette, **caractérisée en ce qu'**elle contient en outre :
2 à 65 % de poudre de caroube ;
25 à 35 % de graisse végétale fractionnée de palme ;
2 à 45 % de sucres à faible indice glycémique choisis parmi le sucre de caroube et le sucre de coco
0 à 33 % d'édulcorant au maltitol ;
2 à 7 % de graisse de coco choisie parmi l'huile de coco et le lait de coco ;
2 à 20 % de dérivé de riz, choisi parmi la farine de riz, l'extrait de riz et la poudre pour la préparation de boissons au riz ;
2 à 20 % de farine de patate douce ;
0 à 11,23 % de maltodextrine ; et
0 à 20 % de polydextrose.

2. « Formulation optimisée de chocolat alternatif de caroube sans lait, avec ou sans sucre ajouté, sans gluten, sans soja et avec ou sans fibres », selon la revendication 1, avec 0,40 % de lécithine de tournesol, 0,20 % d'arôme identique au lait condensé naturel, 0,07 % d'arôme naturel de vanille et 0,10 % d'arôme naturel de noisette, **caractérisée en ce que** la formule préférée contient en outre : 12 % de poudre de caroube ; 30 % de graisse végétale fractionnée de palme ; 30 % de sucre de caroube ; 2 % d'huile de noix de coco ; 12,60 % de farine de riz ; et 12,63 % de farine de patate douce.

3. « Formulation optimisée de chocolat alternatif de caroube sans lait, avec ou sans sucre ajouté, sans gluten, sans soja et avec ou sans fibres », avec 0,40 % de lécithine de tournesol, 0,20 % d'arôme identique à celui du lait condensé naturel, 0,07 % d'arôme naturel de vanille et 0,10 % d'arôme naturel de noisette, **caractérisée en ce qu'**elle contient en outre :
2 à 65 % de poudre de caroube ;
25 à 35 % de graisse végétale fractionnée de palme ;
2 à 7 % de graisse de coco choisie parmi l'huile de coco et le lait de coco ;
0 à 35 % d'édulcorant au maltitol ;
2 à 20 % de farine de patate douce ;
0 à 11,23 % de maltodextrine ;
et 0 à 20 % de polydextrose.

4. « Formulation optimisée de chocolat alternatif de caroube sans lait, avec ou sans sucre ajouté, sans gluten, sans soja et avec ou sans fibres », selon la revendication 3, avec 0,40 % de lécithine de tournesol, 0,20 % d'arôme identique à celui du lait condensé naturel, 0,07 % d'arôme naturel de vanille et 0,10 % d'arôme naturel de noisette, **caractérisée en ce que** la formule préférée contient en outre: 12 % de poudre de caroube; 30 % de graisse végétale fractionnée de palme ; 28 % d'édulcorant au maltitol ; 2 % d'huile de noix de coco ; 12,23 % de polydextrose ; et 15 % de farine de patate douce.

5. « Formulation optimisée de chocolat alternatif de caroube sans lait, avec ou sans sucre ajouté, sans gluten, sans soja et avec ou sans fibres », avec 0,40 % de lécithine de tournesol, 0,20 % d'arôme identique au lait condensé naturel, 0,07 % d'arôme naturel de vanille et 0,10% d'arôme naturel de noisette, **caractérisée en ce qu'**elle contient en outre :
2 à 65 % de poudre de caroube ;
25 à 35 % de graisse végétale fractionnée de palme ;
2 à 7 % de graisse de coco choisie parmi l'huile de coco et le lait de coco ;
0 à 35 % d'édulcorant au maltitol ;
2 à 20 % de dérivé de riz, choisi parmi la farine de riz, l'extrait de riz et la poudre pour la préparation de boissons au riz ;
2 à 20 % de farine de patate douce ;
0 à 11,23 % de maltodextrine ; et
0 à 20 % de polydextrose.

6. « Formulation optimisée de chocolat alternatif de caroube sans lait, avec ou sans sucre ajouté, sans gluten, sans soja et avec ou sans fibres », selon la revendication 5, avec 0,40 % de lécithine de tournesol, 0,20 % d'arôme identique au lait condensé naturel, 0,07 % d'arôme naturel de vanille et 0,10 % d'arôme naturel de noisette, **caractérisée en ce que** la formule préférée contient en outre : 10 % de poudre de caroube ; 30 % de graisse végétale fractionnée de palme ; 25 % d'édulcorant au maltitol ; 2 % d'huile de noix de coco ; 12,23 % de polydextrose ; 10 % de farine de riz ; et 10 % de farine de patate douce.

7. « Formulation optimisée de chocolat alternatif de caroube sans lait, avec ou sans sucre ajouté, sans gluten, sans soja et avec ou sans fibres », avec 0,40 % de lécithine de tournesol, 0,20 % d'arôme identique au lait condensé naturel, 0,07 % d'arôme naturel de vanille et 0,10% d'arôme naturel de noisette, **caractérisée en ce qu'**elle contient en outre :
2 à 65 % de poudre de caroube ;
25 à 35 % de graisse végétale fractionnée de palme
2 à 7 % de graisse de coco choisie parmi l'huile de coco et le lait de coco ;
0 à 35 % d'édulcorant au maltitol ;
2 à 20 % de dérivé de riz, choisi parmi la farine de riz, l'extrait de riz et la poudre pour la préparation de boissons au riz ;
0 à 20 % de maltodextrine ; et
0 à 11,23 % de polydextrose.

8. « Formulation optimisée de chocolat alternatif de caroube sans lait, avec ou sans sucre ajouté, sans gluten, sans soja et avec ou sans fibres », selon la revendication 7, avec 0,40 % de lécithine de tournesol, 0,20 % d'arôme identique au lait condensé naturel, 0,07 % d'arôme naturel de vanille et 0,10 % d'arôme naturel de noisette, **caractérisée en ce que** la formule préférée contient en outre : 10 % de poudre de caroube ; 30 % de graisse végétale fractionnée de palme ; 30 % d'édulcorant au maltitol ; 2 % d'huile de noix de coco ; 12 % de polydextrose ; 0,23 % de maltodextrine ; et 15 % de farine de riz.
